(19) Europäisches Patentamt / European Patent Office / Office européen des brevets

(11) **EP 3 070 452 B1**

(12) **EUROPEAN PATENT SPECIFICATION**

(45) Date of publication and mention of the grant of the patent:
**05.12.2018 Bulletin 2018/49**

(51) Int Cl.:
**G01L 25/00** *(2006.01)* **G01L 27/00** *(2006.01)*

(21) Application number: **16160457.4**

(22) Date of filing: **15.03.2016**

(54) **CORRECTION DEVICE, CORRECTION METHOD, PROGRAM, AND ELECTROSTATIC CAPACITANCE TYPE PRESSURE SENSOR**

KORREKTURVORRICHTUNG, KORREKTURVERFAHREN, PROGRAMM UND ELEKTROSTATISCHER KAPAZITANZDRUCKSENSOR

DISPOSITIF DE CORRECTION, PROCÉDÉ DE CORRECTION, PROGRAMME ET CAPTEUR DE PRESSION DE TYPE À CAPACITÉ ÉLECTROSTATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2015 JP 2015053140**

(43) Date of publication of application:
**21.09.2016 Bulletin 2016/38**

(73) Proprietor: **Alps Electric Co., Ltd.**
**Tokyo 145-8501 (JP)**

(72) Inventors:
• **Hiratsuka, Kazuhiko**
**Tokyo, Tokyo 145-8501 (JP)**

• **Suzuki, Hajime**
**Tokyo, Tokyo 145-8501 (JP)**
• **Shiine, Tomohiro**
**Tokyo, Tokyo 145-8501 (JP)**
• **Igarashi, Takao**
**Tokyo, Tokyo 145-8501 (JP)**

(74) Representative: **Schmitt-Nilson Schraud Waibel Wohlfrom**
**Patentanwälte Partnerschaft mbB**
**Destouchesstraße 68**
**80796 München (DE)**

(56) References cited:
**GB-A- 1 479 192**

**Description**

BACKGROUND OF THE INVENTION

1. Field of the Invention

The present invention relates to a correction device, a correction method, and a program which correct an output of an electrostatic capacitance type pressure sensor having hysteresis characteristics in which an error in a read value of electrostatic capacitance changes depending on a maximum ultimate load of an applied load at the time of an increase in the applied load and at the time of a decrease in the applied load.

2. Description of the Related Art

A load sensor has a difference of an output value in a process for increasing (gradually increasing) a load and in a process for decreasing (gradually decreasing) the load even if the same load is loaded. The difference is called a hysteresis error since a load cell is different depending on the history of the loaded load. In order to correct the hysteresis error, a technique which estimates gradually increasing or gradually decreasing hysteresis correction characteristics by correcting a gradually increasing or gradually decreasing error maximum value and a gradually increasing or gradually decreasing error maximum load value of the original gradually increasing and gradually decreasing hysteresis characteristics based on the ratio of the difference between a load at a turning point and a lower limit load value or an upper limit load value to the difference between the lower limit load value and the upper limit load value instead of using original gradually increasing and gradually decreasing characteristics is suggested (for example, see Japanese Unexamined Patent Application Publication No. 2006-30126).

However, in the invention disclosed in Japanese Unexamined Patent Application Publication No. 2006-30126, in regard to an error at a maximum load turning point, an error value is calculated by proportional calculation using a turning point of an actually applied load; thus, there is a problem in that the above-described invention can only be applied to a load sensor in which a change in load and a value of a hysteresis error change linearly, that is, change in proportion with each other.

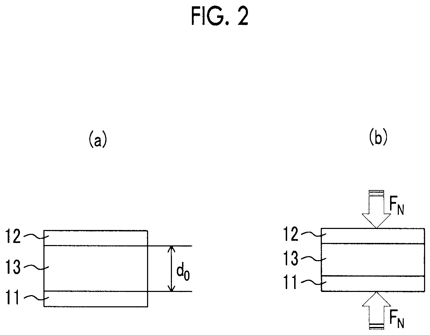

GB 1 479 192 relates to electrical weighing apparatus subject to hysteresis wherein the deviation from true weight is stated to follow a square low relationship, with zero value at no load and maximum load, and is positive for increasing loads and negative for decreasing loads. The apparatus has a known maximum load value and a predetermined maximum hysteresis deviation. A mathematical expression is obtained for the hysteresis error, dependent on whether the load is increasing or decreasing, based on the last calculated hysteresis deviation for a load, and a logic sequence network is shown in Fig. 2 to calculate the hysteresis for a new load, including means for determining whether the load is increasing or decreasing and for ensuring that the hysteresis deviation at no load and full load is zero.

SUMMARY OF THE INVENTION

The invention provides a correction device, a correction method, a program, and an electrostatic capacitance type pressure sensor capable of correcting a hysteresis error in which a maximum value has a nonlinear characteristic with respect to a change in load.

A correction device according to an aspect of the invention is claimed in claim 1.

With this configuration, it is possible to provide a correction device capable of correcting a hysteresis error in which a maximum value has a nonlinear characteristic with respect to a change in load.

According to the invention, the applied load is $F_N$, the ultimate load is $F_X$, and the rated load of the electrostatic capacitance type pressure sensor is $F_{MAX}$, the first function is $f_{PEAK}(F_X)$, and the second function is $f_{HYS}(F_N/F_X \times F_{MAX})$, the correction unit corrects the electrostatic capacitance at the time of the decrease in load by subtracting the correction value $f_{PEAK}(F_X) \times f_{HYS}(F_N/F_X \times F_{MAX})$ generated by the correction value generation unit from electrostatic capacitance at the time of the decrease in load.

With this configuration, it is possible to correct the electrostatic capacitance at the time of the decrease in load just by subtracting the correction value generated by the correction value generation unit from the electrostatic capacitance at the time of the decrease in load.

According to the invention, the correction value generation unit does not generate a correction value for electrostatic capacitance actually read at the time of an increase in load. With this configuration, since correction at the time of the increase in load is not required, it is possible to reduce a load of arithmetic processing.

According to the invention, the second function $f_{HYS}(F_N/F_X \times F_{MAX})$ is ($[An \times (F_{MAX}/F_X \times F_N)^n + A(n-1) \times (F_{MAX}/F_X \times F_N)^{(n-1)} ... + A1 \times (F_{MAX}/F_X \times F_N) + A0]$). In the expression, A0 to An are constants.

Preferably, the first function and the second function are defined based on simulation results or measured values.

A correction method according to another aspect of the invention is claimed in claim 3.

With this configuration, it is possible to provide a correction method capable of correcting a hysteresis error in which a maximum value has a nonlinear characteristic with respect to a change in load.

A program according to the invention is provided in claim 4.

With this configuration, it is possible to provide a program capable of correcting a hysteresis error in which a maximum value has a nonlinear characteristic with respect to a change in load.

Preferably, a designated value to be detected is used as the applied load, and the electrostatic capacitance type pressure sensor further includes a detection unit which detects that the electrostatic capacitance actually read at the time of the decrease in load becomes the electrostatic capacitance corrected by the correction unit at the time of the decrease in the applied load.

With this configuration, it is possible to accurately detect that the applied load becomes the designated value to be detected at the time of the decrease in the applied load with the amount of simple arithmetic operation.

As described above, according to the aspects of the invention, it is possible to provide a correction device, a correction method, a program, and an electrostatic capacitance type pressure sensor capable of correcting a hysteresis error in which a maximum value has a nonlinear characteristic with respect to a change in load.

BRIEF DESCRIPTION OF THE DRAWINGS

Fig. 1 is a configuration diagram of an electrostatic capacitance type pressure sensor according to an embodiment of the invention.

Figs. 2A and 2B are configuration diagrams of a load sensor which is connected to a correction device according to the embodiment of the invention.

Fig. 3 is a functional block diagram of the correction device according to the embodiment of the invention.

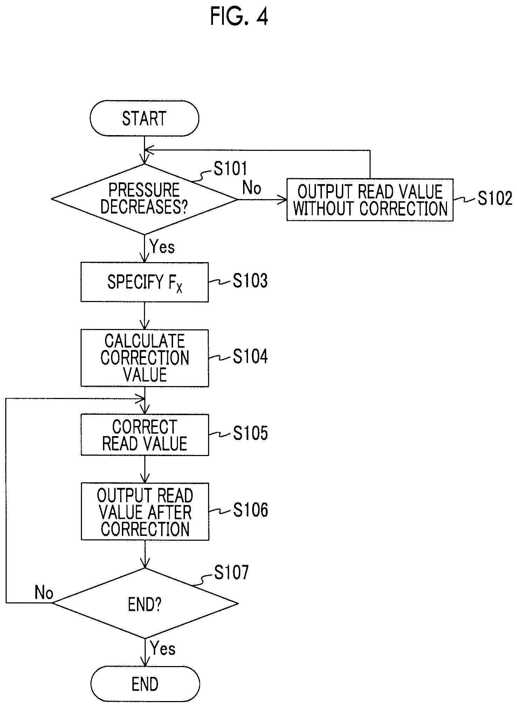

Fig. 4 is a flowchart showing the operation of the correction device according to the embodiment of the invention.

Fig. 5 is a configuration diagram of an electrostatic capacitance type pressure sensor according to another embodiment of the invention.

DESCRIPTION OF THE PREFERRED EMBODIMENTS

Hereinafter, an embodiment of the invention will be described in detail referring to the drawings.

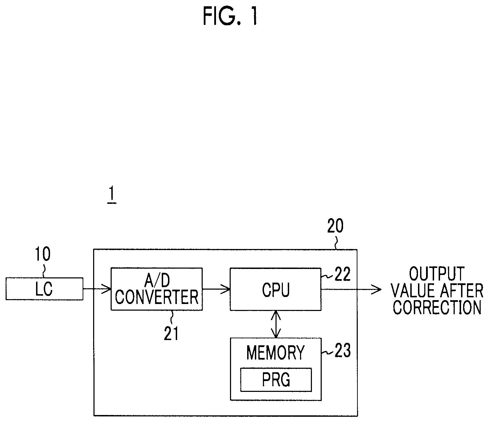

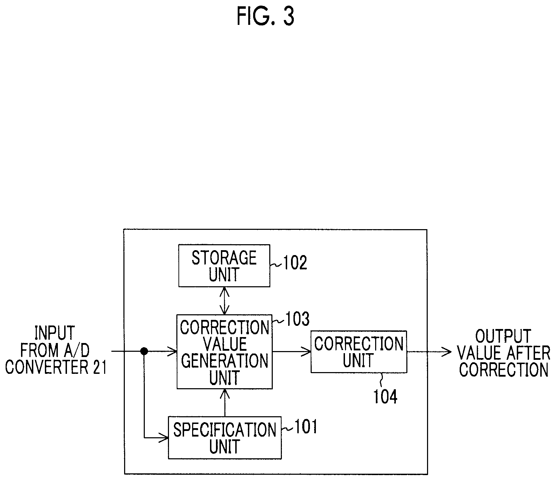

Fig. 1 is a configuration diagram of an electrostatic capacitance type pressure sensor 1 according to the embodiment of the invention. Figs. 2A and 2B are configuration diagrams of a load sensor 10 which is connected to a correction device 20 according to this embodiment. Fig. 3 is a functional block diagram of the correction device 20 according to this embodiment.

As shown in Fig. 1, the electrostatic capacitance type pressure sensor 1 has the load sensor 10 and the correction device 20.

The correction device 20 is connected to the load sensor 10, and corrects a detection value output from the load sensor 10. The load sensor 10 for use in this embodiment is an electrostatic capacitance type pressure sensor, and as shown in Figs. 2A and 2B, is constituted of two electrodes 11 and 12, and a dielectric 13 sandwiched between the two electrodes 11 and 12. Fig. 2A shows the state of the load sensor 10 before a load is applied, and Fig. 2B shows the state of the load sensor 10 after a load is applied. As shown in Fig. 2B, in a state where load $F_N$ is applied at a rated load, the dielectric 13 is elastically deformed and decreases in thickness.

If the thickness of the dielectric 13 shown in Fig. 2A in a state where a load is not applied is defined as $d_0$, electrostatic capacitance $C_0$ of the load sensor 10 before the load is applied is represented by Expression (1) described below. The opposing area of the electrodes 11 and 12 is defined as S, and the dielectric constant of the dielectric 13 is defined as $\varepsilon$.

$$C_0 = \varepsilon \cdot S / d_0 \ \dots \ (1)$$

Here, if the spring constant of the dielectric 13 is defined as k, a change $d_N$ in the thickness of the dielectric 13 due to the load $F_N$ can be represented by Expression (2) described below.

$$d_N = F_N / k \ \dots \ (2)$$

From Expressions (1) and (2) described above, the electrostatic capacitance $C_N$ in a state where the load $F_N$ is applied is represented by Expression (3) described below.

$$C_N = \varepsilon \cdot S / (d_0 - d_N) = \varepsilon \cdot S / (d_0 - F_N / k) \ ... \ (3)$$

A characteristic of the electrostatic capacitance type load sensor is that the electrostatic capacitance $C_N$ substantially increases linearly with respect to an increase in the load $F_N$. Furthermore, it is possible to make the amount of displacement to the load large compared to a piezoelectric element type load sensor. However, in the electrostatic capacitance type load sensor, the transition of the value of electrostatic capacitance is different at the time of an increase in load and at the time of a decrease in load.

The electrostatic capacitance of the load sensor 10 can be determined using an existing technique. For example, the electrostatic capacitance of the load sensor 10 can be determined from the ratio of a frequency in a case where there is no load of the two electrodes 11 and 12 to a frequency in a case where there is a load. The frequency used herein is an oscillation frequency which is determined by a time constant of RC charging and a reference voltage of an operational amplifier.

The correction device 20 according to this embodiment corrects the difference (hereinafter, referred to as a hysteresis error) in the value of electrostatic capacitance at the time of the increase in load and at the time of the decrease in load. As shown in Fig. 1, the correction device 20 includes an A/D converter 21 which converts an analog signal output from the load sensor 10 to a digital signal, a CPU 22 as an arithmetic processing device, and a memory 23 as a storage device.

Fig. 3 is a functional block diagram of the correction device 20 according to this embodiment. The CPU 22 reads a program PRG and data from the memory 23, thereby realizing the functions shown in Fig. 3. As shown in Fig. 3, the correction device 20 has a specification unit 101, storage unit 102, a correction value generation unit 103, and a correction unit 104.

The specification unit 101 specifies an ultimate load $F_X$ at the time of an increase in applied load when a load is applied to the load sensor 10. Here, the ultimate load $F_X$ is not a rated load of the load sensor 10, and refers to how far the load is applied, that is, a maximum value of the applied load when a load is applied to the load sensor 10.

The storage unit 102 stores a first function ($f_{PEAK}(F_X)$) for generating a maximum value of a hysteresis when the ultimate load $F_X$ is changed and a second function ($f_{HYS}(F_N/F_X \times F_{MAX})$) for generating a hysteresis when a rated load $F_{MAX}$ of the electrostatic capacitance type pressure sensor is applied. Hereinafter, the first function ($f_{PEAK}(F_X)$) and the second function ($f_{HYS}(F_N/F_X \times F_{MAX})$) will be described.

In this embodiment, the first function ($f_{PEAK}(F_X)$) and the second function ($f_{HYS}(F_N/F_X \times F_{MAX})$) are defined based on simulation results or measured values.

First, if the second function representing a hysteresis generated in the load sensor 10 is defined as $f_{HYS}(F_N)$, the second function $f_{HYS}(F_N)$ is defined as the difference between electrostatic capacitance of the load sensor 10 at the time of the increase in load and electrostatic capacitance of the load sensor 10 at the time of the decrease in load, and can be thus represented by Expression (4) described below.

$$f_{HYS}(F_N) = C_{up}(F_N) - C_{down}(F_N) \ ... \ (4)$$

Here, $C_{up}(F_N)$ is the electrostatic capacitance of the load sensor 10 under the applied load $F_N$ at the time of the increase in load. Furthermore, $C_{down}(F_N)$ is the electrostatic capacitance of the load sensor 10 under the applied load $F_N$ at the time of the decrease in load.

In a case of the electrostatic capacitance type pressure sensor, since the hysteresis changes depending on the rated load $F_{MAX}$, the second function $f_{HYS}(F_N)$ representing a hysteresis curve at the time of the rated load $F_{MAX}$ can be defined as Expression (5) described below.

$$Hys(F_{MAX}, F_N) = f_{HYS}(F_N) \ ... \ (5)$$

Next, if the shape of the hysteresis curve is approximated to a given curved shape without depending on the ultimate load $F_X$, a PEAK value (maximum value) of the hysteresis when the ultimate load $F_X$ is changed is approximated by the first function $f_{PEAK}(F_X)$, and the applied load $F_N$ is normalized by the rated load $F_{MAX}$, the following expression (6) is obtained.

$$\mathrm{Hys}\,(F_X,F_N) \;=\; f_{PEAK}(F_X) \;\times\; f_{HYS}(F_N/F_X \times F_{MAX}) \;\;\ldots\;(6)$$

$F_N$ = 0 to $F_X$
$F_X$ = 0 to $F_{MAX}$

The normalization of the applied load $F_N$ by the rated load $F_{MAX}$ is not statistical normalization, and means that, when the Peak load is reached (a turning point of the load), the hysteresis is zero, and thus, calculation is performed based on a hysteresis ratio = load decrease (Down) / load increase (Up) = 1.

From Expression (6) described above, it can be understood that the hysteresis Hys($F_X$,$F_N$) can be determined from the ultimate load $F_X$, the first function $f_{PEAK}(F_X)$ for generating the maximum value of the hysteresis when the ultimate load $F_X$ is changed, and the second function $f_{HYS}(F_N/F_X \times F_{MAX})$ representing the hysteresis at the time of the rated load $F_{MAX}$. Note that $f_{PEAK}(F_X)$ and $f_{HYS}(F_N/F_X \times F_{MAX})$ should be measured and set by simulations, measurements, or the like in advance.

The second function $f_{HYS}(F_N/F_X \times F_{MAX})$ is a function for generating the hysteresis of the applied load $F_N$ determined according to the ultimate load $F_X$ based on the hysteresis when the rated load $F_{MAX}$ of the load sensor 10 is applied.

The second function $f_{HYS}(F_N/F_X \times F_{MAX})$ can be approximated by Expression (7) described below.

In Expression (7), A0 to An are constants and are determined by a simulation or the like.

$$f_{HYS}(F_N/F_X \times F_{MAX}) \;=\; ([An \;\times\; (F_{MAX}/F_X \times F_N)^n \;+\; A(n-1) \;\times\; (F_{MAX}/F_X \times F_N)^{(n-1)}$$

$$\ldots \;+\; A1 \;\times\; (F_{MAX}/F_X \times F_N) \;+\; A0]) \;\;\ldots\;(7)$$

With the above processing, it is possible to calculate a hysteresis component from the read electrostatic capacitance with an approximate value using a representative value. Furthermore, it is possible to reduce a load of arithmetic processing for determining the hysteresis.

The correction value generation unit 103 generates a correction value for electrostatic capacitance actually read at the time of a decrease in load based on the ultimate load $F_X$ specified by the specification unit 101, the first function $f_{PEAK}(F_X)$ stored in the storage unit 102 for generating the maximum value of the hysteresis when the ultimate load $F_X$ is changed, and the second function $f_{HYS}(F_N/F_X \times F_{MAX})$ for generating the hysteresis when the rated load $F_{MAX}$ of the electrostatic capacitance type pressure sensor is applied.

The correction unit 104 corrects the electrostatic capacitance actually read at the time of the decrease in the applied load using the correction value generated by the correction value generation unit 103. Specifically, as shown in Expression (8) described below, a read value $C_{corr}(F_N)$ of electrostatic capacitance after correction is calculated by subtracting the hysteresis Hys($F_X$,$F_N$) as an error from a read value $C_{down}(F_N)$ of electrostatic capacitance of the load sensor 10 at the time of the decrease in load.

$$C_{corr}(F_N) \;=\; C_{down}(F_N) \;-\; \mathrm{Hys}\,(F_X,F_N) \;\;\ldots\;(8)$$

If Expression (6) is substituted in Expression (8) described above, Expression (9) described below can be obtained.

$$C_{corr}(F_N) \;=\; C_{down}(F_N) \;-\; f_{PEAK}(F_X) \;\times\; f_{HYS}(F_N/F_X \times F_{MAX}) \;\;\ldots\;(9)$$

In the correction device 20 according to this embodiment, since a hysteresis is not included in the read value of the load sensor 10 at the time of the increase in load, the read value is used as it is.

Next, the operation of the correction device 20 will be described.

First, if a load is applied to the load sensor 10, the specification unit 101 of the correction device 20 determines whether or not the load decreases (Step S101). In a case where the load does not decrease (No in Step S101), the correction device 20 determines that the load increases, and outputs the read value of the load sensor 10 without correction (Step S102).

In a case where the load decreases (Yes in Step S101), the specification unit 101 of the correction device 20 determines specifies the ultimate load $F_X$ of the load applied to the load sensor 10 (Step S103). Next, the correction value generation unit 103 of the correction device 20 generates the correction value based on the specified ultimate load $F_X$, the first function $f_{PEAK}(F_X)$ stored in the storage unit 102 for generating the maximum value of the hysteresis when the ultimate load $F_X$ is changed, and the second function $f_{HYS}(F_N/F_X \times F_{MAX})$ for generating the hysteresis when the rated load $F_{MAX}$ of the electrostatic capacitance type pressure sensor is applied (Step S104).

Next, the correction unit 104 of the correction device 20 corrects the read value of the load sensor 10 based on the generated correction value (Step S105). Next, the correction device 20 outputs the read value of the load sensor 10 after correction (Step S106). In a case where the operation ends (Yes in Step S107), the correction device 20 ends the operation. In a case where the operation does not end (No in Step S107), the correction device 20 continues to operate.

As described above, the correction device 20 according to this embodiment which corrects an output of an electrostatic capacitance type pressure sensor, in which a hysteresis as the difference between read values of electrostatic capacitance at the time of an increase in applied load and at the time of a decrease in the applied load changes, according to an ultimate load being a maximum value of the applied load includes the specification unit 101 which specifies the ultimate load $F_X$ at the time of the increase in the applied load, the correction value generation unit 103 which generates the correction value for electrostatic capacitance actually read at the time of the decrease in load based on the ultimate load $F_X$ specified by the specification unit, the first function for generating the maximum value of the hysteresis when the ultimate load $F_X$ is changed, and the second function for generating the hysteresis when the rated load $F_{MAX}$ of the electrostatic capacitance type pressure sensor is applied, and the correction unit 104 which corrects the electrostatic capacitance actually read at the time of the decrease in the applied load using the correction value generated by the correction value generation unit. For this reason, it is possible to provide a correction device capable of correcting a hysteresis error in which a maximum value has a nonlinear characteristic with respect to a change in load.

In the embodiment of the invention, the correction unit 104 of the correction device 20 corrects the electrostatic capacitance at the time of the decrease in load by subtracting the correction value $f_{PEAK}(F_X) \times f_{HYS}(F_N/F_X \times F_{MAX})$ generated by the correction value generation unit 103 from the electrostatic capacitance at the time of the decrease in load. For this reason, it is possible to correct the electrostatic capacitance at the time of the decrease in load just by subtracting the correction value generated by the correction value generation unit 103 from the electrostatic capacitance at the time of the decrease in load.

The correction value generation unit 103 of the correction device 20 according to this embodiment does not generate a correction value for electrostatic capacitance actually read at the time of an increase in load. For this reason, correction at the time of the increase in load is not required. As a result, it is possible to reduce a load of arithmetic processing.

The correction method according to this embodiment which corrects an output of an electrostatic capacitance type pressure sensor, in which a hysteresis as the difference between read values of electrostatic capacitance at the time of an increase in applied load and at the time of a decrease in the applied load changes, according to an ultimate load being a maximum value of the applied load includes a step in which the specification unit 101 specifies the ultimate load $F_X$ at the time of the increase in the applied load, a step in which the correction value generation unit 103 generates the correction value for electrostatic capacitance actually read at the time of the decrease in load based on the ultimate load $F_X$ specified by the specification unit, the first function for generating the maximum value of the hysteresis when the ultimate load $F_X$ is changed, and the second function for generating the hysteresis when the rated load $F_{MAX}$ of the electrostatic capacitance type pressure sensor is applied, and a step in which the correction unit 104 corrects the electrostatic capacitance actually read at the time of the decrease in the applied load using the correction value generated by the correction value generation unit. For this reason, it is possible to provide a correction method capable of correcting a hysteresis error in which a maximum value has a nonlinear characteristic with respect to a change in load.

The program according to this embodiment which corrects an output of an electrostatic capacitance type pressure sensor, in which a hysteresis as the difference between read values of electrostatic capacitance at the time of an increase in applied load and at the time of a decrease in the applied load changes, according to an ultimate load being a maximum value of the applied load causes a computer to execute a step of specifying the ultimate load $F_X$ at the time of the increase in the applied load, a step of generating the correction value for electrostatic capacitance actually read at the time of the decrease in load based on the specified ultimate load $F_X$, the first function for generating the maximum value of the hysteresis when the ultimate load $F_X$ is changed, and the second function for generating the hysteresis when the rated load $F_{MAX}$ of the electrostatic capacitance type pressure sensor is applied, and a step of correcting the electrostatic capacitance actually read at the time of the decrease in the applied load using the correction value generated by the correction value generation unit. For this reason, it is possible to provide a program capable of correcting a hysteresis error in which a maximum value has a nonlinear characteristic with respect to a change in load.

Other Embodiments

The invention is not limited to the foregoing embodiment, and can be changed in design and embodied without departing from the spirit of the invention.

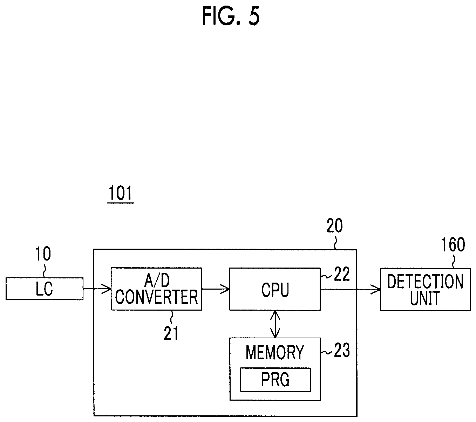

Fig. 5 is a configuration diagram of an electrostatic capacitance type pressure sensor 101 according to another embodiment of the invention.

As shown in Fig. 5, in the electrostatic capacitance type pressure sensor 101, a detection unit 160 is provided at the post stage of the correction device 20 shown in Fig. 1.

In this example, as the applied load $F_N$, a designated value to be detected is used. The designated value is, for example, 2.5 N.

The detection unit 160 monitors electrostatic capacitance after correction input from the correction unit 104 of the correction device 20 shown in Fig. 3 at the time of a decrease in load and detects whether or not electrostatic capacitance after correction becomes the designated value.

With this configuration, it is possible to accurately detect that the applied load $F_N$ becomes the designated value to be detected with the amount of simple arithmetic operation at the time of the decrease in the applied load $F_N$.

It should be understood by those skilled in the art that various modifications, combinations, sub-combinations and alterations may occur depending on design requirements and other factors insofar as they are within the scope of the appended claims.

**Claims**

1. A correction device (20) which corrects an output of an electrostatic capacitance type pressure sensor (1), in which a hysteresis as the difference between read values of electrostatic capacitance at the time of an increase in applied load and at the time of a decrease in the applied load $F_N$ changes, according to an ultimate load $F_X$ of the applied load $F_N$ and a maximum ultimate load $F_{MAX}$, which is a rated load $F_{MAX}$ of the electrostatic pressure sensor (1), of the applied load $F_N$, wherein the ultimate load $F_X$ is a maximum value of the applied load $F_N$ when a load is applied to the electrostatic capacitance type pressure sensor, the correction device (20) comprising:

   a specification unit (101) configured to specify the ultimate load $F_X$ at the time of the increase in the applied load $F_N$;
   a correction value generation unit (103) configured to generate a correction value for electrostatic capacitance actually read at the time of a decrease in load $F_N$ based on the ultimate load $F_X$ specified by the specification unit (101); and
   a correction unit (104) configured to correct electrostatic capacitance actually read at the time of the decrease in the applied load $F_N$ using the correction value generated by the correction value generation unit (103);
   **characterized in that**
   the correction value generation unit (103) is configured to not generate a correction value for electrostatic capacitance actually read at the time of an increase in load $F_N$;
   the correction value generation unit (103) is configured to generate a correction value, which is a product of a first function for generating a maximum value of the hysteresis when the ultimate load $F_X$ is changed, and a second function for generating a hysteresis of the applied load $F_N$ determined according to the ultimate load $F_X$ based on a hysteresis when the rated load $F_{MAX}$ of the electrostatic capacitance type pressure sensor (1) is applied;
   wherein the first function is $f_{PEAK} (F_X)$, and the second function is $f_{HYS} (F_N/F_X \times F_{MAX})$;
   the correction unit (104) is configured to correct the electrostatic capacitance at the time of the decrease in load $F_N$ by subtracting the correction value $f_{PEAK} (F_X) \times F_{HYS} (F_N/F_X \times F_{MAX})$ generated by the correction value generation unit (103) from electro-static capacitance at the time of the decrease in load; and
   the second function $f_{HYS} (F_N/F_X \times F_{MAX})$ is ($[An \times (F_{MAX}/F_X \times F_N)^n + A(n-1) \times (F_{MAX}/F_X \times F_N)^{(n-1)} ... + A1 \times (F_{MAX}/F_x \times F_N) + A0]$), wherein A0 to An are constants.

2. The correction device (20) according to claim 1,
   wherein the first function and the second function are defined based on simulation results or measured values.

3. A correction method which corrects an output of an electrostatic capacitance type pressure sensor (1), in which a hysteresis as the difference between read values of electrostatic capacitance at the time of an increase in applied load $F_N$ and at the time of a decrease in the applied load $F_N$ changes, according to an ultimate load $F_X$ of the applied load $F_N$ and a maximum ultimate load $F_{MAX}$, which is a rated load $F_{MAX}$ of the electrostatic pressure sensor (1), of the applied load $F_N$, wherein the ultimate load $F_X$ is a maximum value of the applied load $F_N$ when a load is applied to the electrostatic capacitance type pressure sensor (1), the correction method comprising:
   a step in which a specification unit (101) specifies an ultimate load $F_X$ at the time of the increase in the applied load $F_N$;
   a step in which a correction value generation unit (103) generates a correction value for electrostatic capacitance actually read at the time of a decrease in load $F_N$ based on the ultimate load $F_X$ specified by the specification unit (101), a first function for generating a maximum value of the hysteresis when the ultimate load $F_X$ is changed, and a second function for generating a hysteresis of the applied load $F_N$ determined according to the ultimate load $F_X$ based on a hysteresis when the rated load $F_{MAX}$ of the electrostatic capacitance type pressure sensor (1) is applied; and a step in which a correction unit (104) corrects electrostatic capacitance actually read at the time of the decrease in the applied $F_N$ using the correction value generated by the correction value generation unit (103); wherein the correction value generation unit (103) does not generate a correction value for electrostatic capacitance actually read at the time of an increase in load $F_N$;

wherein the first function is $f_{PEAK}$ ($F_X$), and the second function is $f_{HYS}$ ($F_N/F_X \times F_{MAX}$)

wherein the correction unit (104) is configured to correct the electrostatic capacitance at the time of the decrease in load by subtracting the correction value $f_{PEAK}$ ($F_X$) $\times$ $f_{HYS}$ ($F_N/F_X \times F_{MAX}$) generated by the correction value generation unit (103) from electrostatic capacitance at the time of the decrease in load; and

wherein the second function $f_{HYS}$ ($F_N/F_X \times F_{MAX}$) is ([An $\times$ ($F_{MAX}/F_X \times F_N$)$^n$ + A(n-1) $\times$ ($F_{MAX}/F_X \times F_N$)$^{(n-1)}$ ... + A1 $\times$ ($F_{MAX}/F_X \times F_N$) + A0]), wherein A0 to An are constants.

4. A program which corrects an output of an electrostatic capacitance type pressure sensor (1) comprising the correction method according to claim 3.

5. An electrostatic capacitance type pressure sensor (1) comprising the correction device (20) according to claim 1 or 2.

6. The electrostatic capacitance type pressure sensor (1) according to claim 5, wherein a designated value to be detected is used as the applied load $F_N$, and the electrostatic capacitance type pressure sensor (1) further comprises:

a detection unit (160) which detects that the electrostatic capacitance actually read at the time of the decrease in load becomes the electrostatic capacitance corrected by the correction unit (104) at the time of the decrease in the applied load $F_N$.

## Patentansprüche

1. Korrekturvorrichtung (20), die einen Ausgang eines elektrostatischen kapazitiven Drucksensors (1) korrigiert, bei dem sich eine Hysterese als Differenz zwischen gelesenen Werten der elektrostatischen Kapazität zum Zeitpunkt einer Zunahme der aufgebrachten Last und zum Zeitpunkt einer Abnahme der aufgebrachten Last $F_N$ ändert, und zwar in Abhängigkeit von einer Bruchlast $F_X$ der aufgebrachten Last $F_N$ und einer maximalen Bruchlast $F_{MAX}$ - bei der es sich um eine Nennlast $F_{MAX}$ des elektrostatischen Drucksensors (1) handelt - der aufgebrachten Last $F_N$, wobei die Bruchlast $F_X$ ein Maximalwert der aufgebrachten Last $F_N$ ist, wenn eine Last auf den elektrostatischen kapazitiven Drucksensor aufgebracht wird, wobei die Korrekturvorrichtung (20) aufweist:

eine Spezifikationseinheit (101), die dazu ausgebildet ist, die Bruchlast $F_X$ zum Zeitpunkt der Zunahme der aufgebrachten Last $F_N$ zu spezifizieren;
eine Korrekturwert-Erzeugungseinheit (103), die dazu ausgebildet ist, einen Korrekturwert für die zum Zeitpunkt einer Abnahme der Last $F_N$ tatsächlich gelesene elektrostatische Kapazität auf der Basis der von der Spezifikationseinheit (101) spezifizierten Bruchlast $F_X$ zu erzeugen; und
eine Korrektureinheit (104), die dazu ausgebildet ist, die zum Zeitpunkt der Abnahme der aufgebrachten Last $F_N$ tatsächlich gelesene elektrostatische Kapazität untere Verwendung des von der Korrekturwert-Erzeugungseinheit (103) erzeugten Korrekturwerts zu korrigieren;
**dadurch gekennzeichnet, dass** die Korrekturwert-Erzeugungseinheit (103) dazu ausgebildet ist, keinen Korrekturwert für die zum Zeitpunkt einer Zunahme der Last $F_N$ tatsächlich gelesene elektrostatische Kapazität zu erzeugen;
dass die Korrekturwert-Erzeugungseinheit (103) dazu ausgebildet ist, einen Korrekturwert zu erzeugen, bei dem es sich um ein Produkt aus einer ersten Funktion zum Erzeugen eines Maximalwerts der Hysterese bei Veränderung der Bruchlast $F_X$ und aus einer zweiten Funktion zum Erzeugen einer Hysterese der aufgebrachten Last $F_N$ handelt, die in Abhängigkeit von der Bruchlast $F_X$ auf der Basis einer Hysterese bestimmt wird, wenn die Nennlast $F_{MAX}$ des elektrostatischen kapazitiven Drucksensors (1) aufgebracht wird;
wobei die erste Funktion $f_{PEAK}$ ($F_X$) ist, und
die zweite Funktion $f_{HYS}$ ($F_N/F_X \times F_{MAX}$) ist;
dass die Korrektureinheit (104) dazu ausgebildet ist, die elektrostatische Kapazität zum Zeitpunkt der Abnahme der Last $F_N$ zu korrigieren, indem der von der Korrekturwert-Erzeugungseinheit (103) erzeugte Korrekturwert $f_{PEAK}$ ($F_X$) $\times$ $F_{HYS}$ ($F_N/F_X \times F_{MAX}$) von der elektrostatischen Kapazität zum Zeitpunkt der Abnahme der Last subtrahiert wird; und

dass die zweite Funktion $f_{HYS}$ ($F_N/F_X \times F_{MAX}$) ([An $\times$ ($F_{MAX}/F_X \times F_N$)$^n$ + A(n-1) x ($F_{MAX}/F_X \times F_N$)$^{(n-1)}$ ... + A1 $\times$ ($F_{MAX}/F_X \times F_N$) + A0]) ist, wobei A0 bis An Konstanten sind.

2. Korrekturvorrichtung (20) nach Anspruch 1,
wobei die erste Funktion und die zweite Funktion auf der Basis von Simulationsergebnissen oder gemessenen Werten definiert sind.

3. Korrekturverfahren, das einen Ausgang eines elektrostatischen kapazitiven Drucksensors (1) korrigiert, bei dem sich eine Hysterese als Differenz zwischen gelesenen Werten der elektrostatischen Kapazität zum Zeitpunkt einer Zunahme der aufgebrachten Last $F_N$ und zum Zeitpunkt einer Abnahme der aufgebrachten Last $F_N$ ändert, und zwar in Abhängigkeit von einer Bruchlast $F_X$ der aufgebrachten Last $F_N$ und einer maximalen Bruchlast $F_{MAX}$ - bei der es sich um eine Nennlast $F_{MAX}$ des elektrostatischen Drucksensors (1) handelt - der aufgebrachten Last $F_N$, bei der es sich um eine Nennlast $F_{MAX}$ des elektrostatischen Drucksensors (1) handelt, wobei die Bruchlast $F_X$ ein Maximalwert der aufgebrachten Last $F_N$ ist, wenn eine Last auf den elektrostatischen kapazitiven Drucksensor (1) aufgebracht wird, wobei das Korrekturverfahren folgende Schritte aufweist:

einen Schritt, in dem eine Spezifikationseinheit (101) eine Bruchlast $F_X$ zum Zeitpunkt der Zunahme der aufgebrachten Last $F_N$ spezifiziert;
einen Schritt, in dem eine Korrekturwert-Erzeugungseinheit (103) einen Korrekturwert für die zum Zeitpunkt einer Abnahme der Last $F_N$ tatsächlich gelesene elektrostatische Kapazität auf der Basis der von der Spezifikationseinheit (101) spezifizierten Bruchlast $F_X$, einer ersten Funktion zum Erzeugen eines Maximalwerts der Hysterese bei Veränderung der Bruchlast $F_X$ und einer zweiten Funktion zum Erzeugen einer Hysterese der aufgebrachten Last $F_N$ erzeugt, die in Abhängigkeit von der Bruchlast $F_X$ auf der Basis einer Hysterese bestimmt wird, wenn die Nennlast $F_{MAX}$ des elektrostatischen kapazitiven Drucksensors (1) aufgebracht wird; und
einen Schritt, in dem eine Korrektureinheit (104) die zum Zeitpunkt der Abnahme der aufgebrachten Last $F_N$ tatsächlich gelesene elektrostatische Kapazität untere Verwendung des von der Korrekturwert-Erzeugungseinheit (103) erzeugten Korrekturwerts korrigiert;
wobei die Korrekturwert-Erzeugungseinheit (103) keinen Korrekturwert für die zum Zeitpunkt einer Zunahme der Last $F_N$ tatsächlich gelesene elektrostatische Kapazität erzeugt;
wobei die erste Funktion $f_{PEAK}$ ($F_X$) ist, und die zweite Funktion $f_{HYS}$ ($F_N/F_X \times F_{MAX}$) ist,
wobei die Korrektureinheit (104) dazu ausgebildet ist, die elektrostatische Kapazität zum Zeitpunkt der Abnahme der Last zu korrigieren, indem der von der Korrekturwert-Erzeugungseinheit (103) erzeugte Korrekturwert $f_{PEAK}$ ($F_X$) $\times$ $F_{HYS}$ ($F_N/F_X \times F_{MAX}$) von der elektrostatischen Kapazität zum Zeitpunkt der Abnahme der Last subtrahiert wird; und
wobei die zweite Funktion $f_{HYS}$ ($F_N/F_X \times F_{MAX}$) ([An $\times$ ($F_{MAX}/F_X \times F_N$)$^n$ + A(n-1) $\times$ ($F_{MAX}/F_X \times F_N$)$^{(n-1)}$ ... + A1 $\times$ ($F_{MAX}/F_X \times F_N$) + A0]) ist, wobei A0 bis An Konstanten sind.

4. Programm, das einen Ausgang eines elektrostatischen kapazitiven Drucksensors (1) korrigiert und das Korrekturverfahren nach Anspruch 3 aufweist.

5. Elektrostatischer kapazitiver Drucksensor (1), der die Korrekturvorrichtung (20) nach Anspruch 1 oder 2 aufweist.

6. Elektrostatischer kapazitiver Drucksensor (1) nach Anspruch 5,
wobei ein bestimmter zu erfassender Wert als aufgebrachte Last $F_N$ verwendet wird, und
wobei der elektrostatische kapazitive Drucksensor (1) ferner aufweist:

eine Detektionseinheit (160), die detektiert, dass die zum Zeitpunkt der Lastabnahme tatsächlich gelesene elektrostatische Kapazität zu der von der Korrektureinheit (104) zum Zeitpunkt der Abnahme der aufgebrachten Last $F_N$ korrigierten elektrostatischen Kapazität wird.

**Revendications**

1. Dispositif de correction (20) qui corrige une sortie d'un capteur de pression (1) du type à capacité électrostatique, dans lequel une hystérésis, sous la forme de la différence entre des valeurs lues de capacité électrostatique au moment d'une augmentation concernant une charge qui s'exerce et au moment d'une diminution concernant la charge qui s'exerce, se modifie, en fonction d'une charge ultime $F_x$ de la charge $F_N$ qui s'exerce et d'une charge ultime maximale $F_{MAX'}$, qui représente une charge nominale $F_{MAX}$ du capteur de pression électrostatique (1), de la charge $F_N$ qui s'exerce ;

dans lequel la charge ultime $F_X$ représente une valeur maximale de la charge $F_N$ qui s'exerce lorsqu'une charge s'exerce sur le capteur de pression du type à capacité électrostatique, le dispositif de correction (20) comprenant :

une unité de spécification (101) configurée pour spécifier la charge ultime $F_x$ au moment de l'augmentation concernant la charge $F_N$ qui s'exerce ;

une unité de génération de valeur de correction (103) configurée pour générer une valeur de correction pour une capacité électrostatique réellement lue au moment d'une diminution concernant la charge $F_N$ en se basant sur la charge ultime $F_x$ spécifiée par l'unité de spécification (101) ; et

une unité de correction (104) configurée pour corriger la capacité électrostatique réellement lue au moment de la diminution concernant la charge $F_N$ en utilisant la valeur de correction générée par l'unité de génération de valeur de correction (103) ;

**caractérisé en ce que**

l'unité de génération de valeur de correction (103) est configurée pour ne pas générer une valeur de correction pour la capacité électrostatique réellement lue au moment d'une augmentation concernant la charge $F_N$ ;

l'unité de génération de valeur de correction (103) est configurée pour générer une valeur de correction qui représente un produit d'une première fonction pour la génération d'une valeur maximale de l'hystérésis lorsque la charge ultime $F_x$ a été modifiée, et d'une seconde fonction pour la génération d'une hystérésis de la charge $F_N$ qui s'exerce, déterminée en fonction de la charge ultime $F_x$ en se basant sur une hystérésis lorsque s'exerce la charge nominale $F_{MAX}$ du capteur de pression (1) du type à capacité électrostatique ;

dans lequel la première fonction est $f_{PEAK}(F_x)$ et la seconde fonction est $f_{HYS}(F_N/F_x \times F_{MAX})$ ;

l'unité de correction (104) est configurée pour corriger la capacité électrostatique au moment de la diminution concernant la charge $F_N$ en soustrayant la valeur de correction $f_{PEAK}(F_x) \times f_{HYS}(F_N/F_x \times F_{MAX})$ générée par l'unité de génération de valeur de correction (103) à partir de la capacité électrostatique au moment de la diminution concernant la charge ; et

la seconde fonction $f_{HYS}(F_N/F_x \times F_{MAX})$ est $([A_n \times (F_{MAX}/F_x \times F_N)^n + A(n-1) \times (F_{MAX}/F_x \times F_N)^{(n-1)}... + A1 \times (F_{MAX}/F_x \times F_N) + A0])$ dans laquelle A0 à An sont des constantes.

2. Dispositif de correction (20) selon la revendication 1,
dans lequel la première fonction et la seconde fonction sont définies en se basant sur des résultats de simulation ou sur des valeurs mesurées.

3. Procédé de correction qui corrige une sortie d'un capteur de pression (1) du type à capacité électrostatique, dans lequel une hystérésis, sous la forme de la différence entre des valeurs lues de capacité électrostatique au moment d'une augmentation concernant une charge $F_N$ qui s'exerce et au moment d'une diminution concernant la charge $F_N$ qui s'exerce, se modifie, en fonction d'une charge ultime $F_x$ de la charge $F_N$ qui s'exerce et d'une charge ultime maximale $F_{MAX'}$, qui représente une charge nominale $F_{MAX}$ du capteur de pression électrostatique (1), de la charge $F_N$ qui s'exerce ;

dans lequel la charge ultime $F_X$ représente une valeur maximale de la charge $F_N$ qui s'exerce lorsqu'une charge s'exerce sur le capteur de pression (1) du type à capacité électrostatique, le procédé de correction comprenant :

une étape dans laquelle une unité de spécification (101) spécifie une charge ultime $F_x$ au moment de l'augmentation concernant la charge $F_N$ qui s'exerce ;

une étape dans laquelle une unité de génération de valeur de correction (103) génère une valeur de correction pour une capacité électrostatique réellement lue au moment d'une diminution concernant la charge $F_N$ en se basant sur la charge ultime $F_x$ spécifiée par l'unité de spécification (101) ;

une première fonction pour la génération d'une valeur maximale de l'hystérésis lorsque la charge ultime $F_x$ a été modifiée, et une seconde fonction pour la génération d'une hystérésis de la charge $F_N$ qui s'exerce, déterminée en fonction de la charge ultime $F_x$ en se basant sur une hystérésis lorsque s'exerce la charge nominale $F_{MAX}$ du capteur de pression (1) du type à capacité électrostatique ; et

une étape dans laquelle une unité de correction (104) corrige la capacité électrostatique réellement lue au moment de la diminution concernant la charge $F_N$ qui s'exerce en utilisant la valeur de correction générée par l'unité de génération de valeur de correction (103) ;

dans lequel l'unité de génération de valeur de correction (103) ne génère pas une valeur de correction pour la capacité électrostatique réellement lue au moment d'une augmentation concernant la charge $F_N$ ;

dans lequel la première fonction est $f_{PEAK}$ $(F_x)$ et la seconde fonction est $f_{HYS}$ $(F_N/F_x \times F_{MAX})$ ;

dans lequel l'unité de correction (104) est configurée pour corriger la capacité électrostatique au moment de la diminution concernant la charge en soustrayant la valeur de correction $f_{PEAK}$ $(F_x)$ x $F_{HYS}$ $(F_N/F_x \times F_{MAX})$ générée par l'unité de génération de valeur de correction (103) à partir de la capacité électrostatique au moment de la diminution concernant la charge ; et

dans lequel la seconde fonction $f_{HYS}$ $(F_N/F_x \times F_{MAX})$ est $([A_n \times (F_{MAX}/F_x \times F_N)^n + A(n-1) \times (F_{MAX}/F_x \times F_N)^{(n-1)}... + A1 \times (F_{MAX}/F_x \times F_N) + A0])$ dans laquelle A0 à An sont des constantes.

4.  Programme qui corrige une sortie d'un capteur de pression (1) du type à capacité électrostatique comprenant le procédé de correction selon la revendication 3.

5.  Capteur de pression (1) du type à capacité électrostatique comprenant le dispositif de correction (20) selon la revendication 1 ou 2.

6.  Capteur de pression (1) du type à capacité électrostatique selon la revendication 5, dans lequel une valeur désignée qui doit être détectée est utilisée pour faire office de la charge $F_N$ qui s'exerce ; et

le capteur de pression (1) du type à capacité électrostatique comprend en outre :

une unité de détection (160) qui détecte le fait que la capacité électrostatique réellement lue au moment de la diminution concernant la charge devient la capacité électrostatique corrigée par l'unité de correction (104) au moment de la diminution concernant la charge $F_N$ qui s'exerce.

FIG. 1

# FIG. 2

(a)

(b)

FIG. 3

```
                    ┌─────────────┐
                    │  STORAGE    │ ~102
                    │   UNIT      │
                    └──────┬──────┘
                           ↕
                    ┌─────────────┐ ~103
  INPUT             │ CORRECTION  │
  FROM A/D ────●───▶│   VALUE     │──▶┌────────────┐       OUTPUT
  CONVERTER 21      │ GENERATION  │   │ CORRECTION │──▶ VALUE AFTER
             │      │   UNIT      │   │    UNIT    │    CORRECTION
             │      └──────▲──────┘   └────────────┘
             │             │               )
             │      ┌──────┴──────┐        104
             └─────▶│SPECIFICATION│ ~101
                    │    UNIT     │
                    └─────────────┘
```

# FIG. 4

```
        START
          │
          ▼
    ╱─────────╲ ┌S101
   ╱  PRESSURE  ╲  No    ┌──────────────────┐
  ╱  DECREASES?  ╲──────▶│ OUTPUT READ VALUE │┐ S102
   ╲            ╱        │ WITHOUT CORRECTION│┘
    ╲─────────╱          └──────────────────┘
        │ Yes
        ▼
   ┌──────────┐
   │ SPECIFY Fₓ│┐ S103
   └──────────┘
        │
        ▼
   ┌──────────┐
   │ CALCULATE │
   │ CORRECTION│┐ S104
   │  VALUE    │
   └──────────┘
        │
        ▼
   ┌──────────┐
   │ CORRECT   │┐ S105
   │ READ VALUE│
   └──────────┘
        │
        ▼
   ┌──────────┐
   │OUTPUT READ│
   │VALUE AFTER│┐ S106
   │CORRECTION │
   └──────────┘
        │
        ▼
    ╱─────────╲ ┌S107
No ╱           ╲
◀──╱   END?     ╲
    ╲           ╱
     ╲─────────╱
        │ Yes
        ▼
       END
```

FIG. 5

101

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006030126 A

- GB 1479192 A